# EUROPEAN PATENT APPLICATION

(11) **EP 4 306 835 A1**
(43) Date of publication of application: **17.01.2024**
(21) Application number: 23175338.5
(22) Date of filing: 25.05.2023
(51) Int. Cl.: F16L 13/14

(54) **PRESS-FITTING CONNECTOR FOR CONNECTING A PIPE TO A HYDRAULIC OR PNEUMATIC COMPONENT OR PIPES TO EACH OTHER**

(30) Priority: 14.07.2022 IT 202200014776
(71) Applicant: EUROTIS S.r.l., 20094 Corsico, MI (IT)
(72) Inventor: FRANCHI, Andrea Luigi, 20081 ABBIATEGRASSO MI (IT)
(74) Representative: Modiano, Micaela Nadia

(57) **Abstract**

A press-fitting connector (1) for water systems and for gas systems, comprising a connector body (2) adapted to be press-fitted and provided internally with a female thread (4), a second element (5) of the connector being adapted to be coupled to the connector body (2), by screwing a male thread thereof (6) with the female thread (4), a gasket (3) being interposed between the connector body (2) and the second element (5) of the connector.

## Description

The present invention relates to a press-fitting connector for connecting a pipe to a hydraulic or pneumatic component or pipes to each other, particularly for composite pipes composed of at least one layer of metallic material coupled with at least one layer of synthetic material.

As is known, different types of connectors are used to connect pipes to each other or pipes to other components of hydraulic or pneumatic systems.

In the field of composite pipes, i.e., pipes composed of at least two coupled layers of which at least one is made of metallic material, in particular aluminum, and at least another one is made of synthetic material, so-called "press-fitting" connectors are used, i.e., connectors in which the locking between the pipe and the connectors is achieved by plastic deformation of a portion of the connector at the portion of the pipe that is coupled to the connector.

There are also press-fitting connectors for smooth steel pipes.

Among currently commercially available press-fitting connectors, connectors are known which comprise a connector body that supports a bushing that extends coaxially around a sleeve fitting and is plastically deformable, by pressing performed with adapted pliers, so as to clamp, around the sleeve fitting, an end portion of the pipe which is fitted on the sleeve fitting and arranged between the sleeve fitting and the bushing.

Plastic deformation of the bushing achieves axial locking of the pipe relative to the sleeve fitting.

The hydraulic or pneumatic seal between the pipe and the sleeve fitting is generally achieved by means of one or more gaskets arranged in adapted circumferential seats which are formed on the outer lateral surface of the sleeve fitting and engage on the inner surface of the pipe fitted over the sleeve fitting.

Press-fitting connectors of the known type are provided monolithically, and this entails the fact that different seating diameters of the pipe entail the production and storage of connectors of different types. In fact, while the part of the connector that is pressed is often identical in diameter for all connector shapes, the part that is used for joining with other systems and/or parts of the apparatus may have different diameters. This therefore entails the need to provide a plurality of mutually different connectors.

The aim of the present invention is to provide a press-fitting connector that is extremely versatile and thus allows to reduce the number of connectors to be kept in stock to meet the various requirements.

Within this aim, an object of the present invention is to provide a press-fitting connector that is suitable for providing both water and gas systems.

Another object of the present invention is to provide a press-fitting connector adapted to be installed with pliable steel piping.

A further object of the present invention is to provide a press-fitting connector in which the connector can be pressed with apparatuses of a known type.

Not least object of the present invention is to provide a press-fitting connector that is highly reliable, relatively simple to provide, and at competitive costs.

This aim, as well as these and other objects that will become better apparent hereinafter, are achieved by a press-fitting connector for water systems and for gas systems, characterized in that it comprises a connector body adapted to be press-fitted and provided internally with a female thread, a second element of the connector being adapted to be coupled to said connector body, by screwing a male thread thereof with said female thread, a gasket being accommodated within the connector body and said second element of the connector.

Further characteristics and advantages of the invention will become better apparent from the description of preferred but not exclusive embodiments of the press-fitting connector according to the present invention, illustrated by way of non-limiting example in the accompanying drawings, wherein:

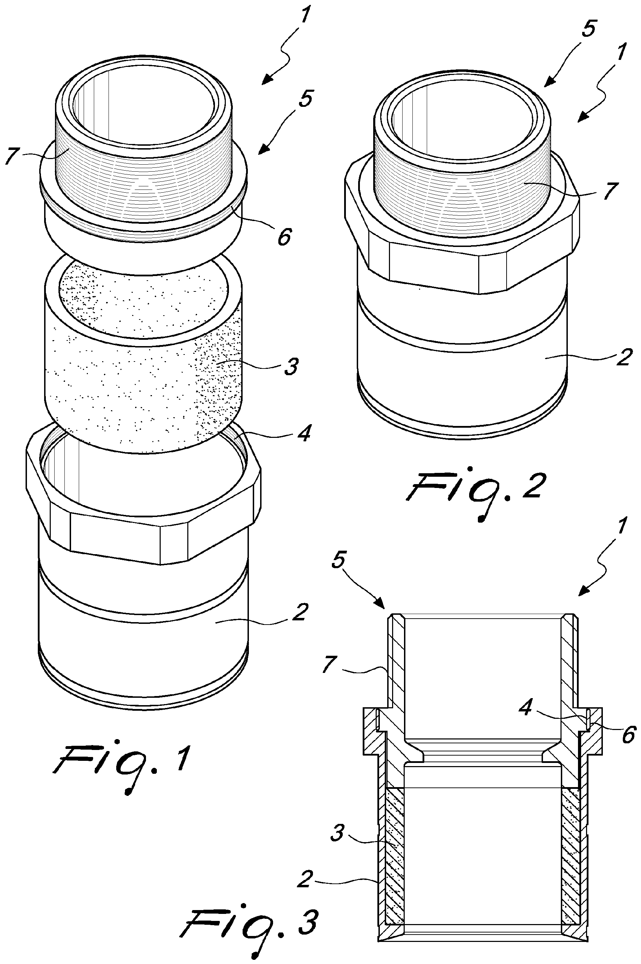

Figure 1 is an exploded perspective view of a connector according to the present invention;
Figure 2 is a perspective view of the connector according to the present invention;
Figure 3 is a longitudinal sectional view of the press-fitting connector according to the present invention.

With reference to the figures, the press-fitting connector according to the present invention, generally designated by the reference numeral 1, comprises a connector body 2, adapted to be press-fitted onto a steel pipe and adapted to internally accommodate a gasket 3 shaped so as to ensure the hydraulic seal of the connector on the pipe.

Appropriately, the body 2 of the connector is internally provided, at its upper opening, opposite to the end being pressed, with a female thread 4, suitable for mating with a second element 5 of the connector, which is designed for joining with other systems and/or parts of an apparatus.

The second element 5 of the connector is conveniently provided with a male thread 6, adapted to engage on the female thread 4.

Therefore, the connector according to the invention is provided by mating the connector body 2, which constitutes a first element of the connector, and the second element of the connector 5, with a gasket 3 accommodated within the connector body 2.

In this manner, a further advantage is obtained in the production/logistics step, since the part of the connector that is pressed, i.e., the connector body 2, is identical in diameter for all types of connectors, while the second element 5 of the connector varies as needed.

Conveniently, the second element 5 of the connector is provided with a threaded body 7 that allows connection to other systems and/or parts of an apparatus.

Conveniently, the second element 5 of the connector can be provided according to different types, without altering the inventive concept discussed above.

Thus, for example, it is possible to have a second element 5 of the connector of the tee type, of the 90-degree elbow type, of the sleeve type, or of the joint type, or threaded elbow type, or joint and elbow type with free nut (fly nut).

However, the previously described concept, according to which the connector body 2 is a first component of the connector while the second element 5 mates by screwing within the first body 2 of the connector, applies to all the above-cited types of connector.

The seal between the male thread 6 and the female thread 4 respectively of the second element 5 of the connector and of the connector body 2, is obtained by means of an adhesive.

In practice it has been found that the press-fitting connector according to the present invention fully achieves the intended aim and objects, since it allows to reduce the number of connectors to be produced and kept in stock by being able to rely on a connector body, i.e., the part of the connector that needs to be pressed, that is always the same.

The connector thus conceived is susceptible of numerous modifications and variations, all of which are within the scope of the accompanying claims.

Moreover, all the details may be replaced with other technically equivalent elements.

In practice, the materials used, as well as the contingent shapes and dimensions, may be any according to the requirements and the state of the art.

The disclosures in Italian Patent Application No. 102022000014776 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A press-fitting connector (1) for water systems and for gas systems, **characterized in that** it comprises a connector body (2) adapted to be press-fitted and provided internally with a female thread (4), a second element (5) of the connector being adapted to be coupled to said connector body (2), by screwing a male thread thereof (6) with said female thread (4), a gasket (3) being accommodated within the connector body (2) and said second element (5) of the connector.

2. The press-fitting connector according to claim 1, **characterized in that** the seal between said male thread (6) and said female thread (4) is obtained by means of an adhesive.

3. The press-fitting connector according to claim 1 or 2, **characterized in that** said second element (5) of the connector is provided as a sleeve.

4. The press-fitting connector according to claim 1, **characterized in that** said second element (5) of the connector is provided as a tee.

5. The press-fitting connector according to claim 1, **characterized in that** said second element (5) of the connector is provided as a 90° elbow.

6. The press-fitting connector according to claim 1, **characterized in that** said second element (5) of the connector is provided as a joint.

7. The press-fitting connector according to claim 1, **characterized in that** said second element (5) of the connector is provided as an elbow.

8. The press-fitting connector according to claim 1, **characterized in that** said second element (5) of the connector is provided as an elbow joint with a free nut.
